Europäisches Patentamt

European Patent Office

Office européen des brevets

(11) Veröffentlichungsnummer: **0 199 148 B1**

(12) **EUROPÄISCHE PATENTSCHRIFT**

(45) Veröffentlichungstag der Patentschrift: **07.10.92**

(21) Anmeldenummer: **86104439.4**

(22) Anmeldetag: **01.04.86**

(51) Int. Cl.⁵: **H04B 3/54**, H04B 1/66

(54) **Netzgebundene Vielfachzugriffseinrichtung.**

(30) Priorität: **26.04.85 DE 3515127**

(43) Veröffentlichungstag der Anmeldung:
**29.10.86 Patentblatt 86/44**

(45) Bekanntmachung des Hinweises auf die
Patenterteilung:
**07.10.92 Patentblatt 92/41**

(84) Benannte Vertragsstaaten:
**AT CH DE FR GB IT LI NL SE**

(56) Entgegenhaltungen:
**EP-A- 0 178 804**
**CH-A- 604 409**
**GB-A- 2 094 598**
**US-A- 4 446 462**

**BELL SYSTEM TECHNICAL JOURNAL, Band
61, Nr. 10, Teil 1, Dezember 1982, Seiten
3007-3017, New Jersey, US; U. TIMOR:
"Multitone frequency-hopped MFSK system
for mobile radio"**

(73) Patentinhaber: **ABB PATENT GmbH
Kallstadter Strasse 1
W-6800 Mannheim 31(DE)**

(72) Erfinder: **Baier, Paul Walter, Prof. Dr.-Ing.
Burgunderstrasse 6
W-6750 Kaiserslautern(DE)**
Erfinder: **Dostert, Klaus, Dr.-Ing.
Bergstrasse 3
W-6751 Krickenbach(DE)**
Erfinder: **Becker, Thomas, Dipl.-Ing.
Dresdener Strasse 64
W-6750 Kaiserslautern(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

IEEE GLOBAL TELECOMMUNICATIONS CON-
FERENCE GLOBECOM '83, San Diego, 28. November - 1. Dezember 1983, Band 3, Seiten
1435-1439, IEEE, New York, US; M. MIZUNO:
"Experimental investigation on the performance of FH-FSK in fading channels"

MICROWAVE JOURNAL, Band 26, Nr. 5, Mai
1983, Seiten 202-207, Dedham, Massachusetts, US; R. MOSER: "Generation and reception of spread-spectrum signals"

IEEE, NATIONAL TELECOMMUNICATIONS
CONFERENCE, San Diego, 2.-4. Dezember
1974, Seiten 536-542, IEEE, New York, US; J.J.
MERKEL et al.: "Microcomputer application
to a spread spectrum frequency hopping
modem"

**Beschreibung**

Die Erfindung betrifft eine netzgebundene eine Vielfachzugriffseinrichtung mit der Möglichkeit der selektiven Adressierung und des selektiven Empfangs.

Ein solches System besteht aus mehreren Sendern und Empfängern, die über ein elektrisches Energieversorgungsnetz miteinander in Verbindung stehen, wobei jeder Sender jeden Empfänger wahlweise ansprechen kann und wobei jeder Empfänger wahlweise das Sendesignal eines jeden Senders empfangen und auswerten kann und wobei mehrere Sender und Empfänger gleichzeitig aktiv sein können. Solche Systeme können vorteilhaft eingesetzt werden, wenn als Übertragungsmedium ein ohnehin vorhandenes elektrisches Energieversorgungsnetz verfügbar ist und wenn mehrere, voneinander unabhängige Nachrichtenquellen und Nachrichtensenken gleichzeitig aktiv sind und selektiv miteinander kommunizieren sollen.

Ein typischer Einsatzbereich für ein solches System wäre ein mit heizungs- und klimatechnischen Anlagen hochinstallierter Gebäudekomplex, in dem gleichzeitig zahlreiche Sensorsignale für Temperatur, Luftfeuchtigkeit usw. an eine zentrale Warte und zahlreiche Steuersignale von der Warte an Stellglieder, wie Mischventile, Motorschütze usw. übertragen werden müssen.

Ein anderer Anwendungsfall wäre darin zu sehen, daß Sensorsignale, die an verschiedenen Stellen einer Fabrikanlage anstehen, über das Energieversorgungsnetz an jeder Stelle der Anlage abgefragt und ausgewertet werden können, indem man dort, z. B. über eine Steckdose, einen Empfänger an das Energieversorgungsnetz anschließt.

In der DE-OS 2 727 263 ist ein System beschrieben, das im Prinzip Vielfachzugriff mit selektiver Adressierung und selektivem Empfang ermöglichen könnte. Bei diesem System werden zur Nachrichtenübertragung Signale im Tonfrequenzbereich verwendet. Die Aufgabe der selektiven Adressierung des selektiven Empfangs könnte hierbei dadurch gelöst werden, daß man zu dem bekannten Verfahren des Frequenzmultiplex oder zu dem bekannten Verfahren des Zeitmultiplex greift.

Nachteilig beim Frequenzmultiplex ist, daß nicht jede der Übertragungsstrecken von einem Sender zu einem Empfänger das gesamte verfügbare Frequenzband nutzt, sondern exklusiv gewisse engere Teilbereiche dieses Bandes. Dadurch können einige der Übertragungsstrecken durch selektive Störsignale und/oder durch selektive Dämpfungsübertragungen der Übertragungsstrecke besonders stark, andere Übertragungsstrecken weniger stark beeinträchtigt werden, so daß das System in diesem Sinne nicht ausgewogen ist. Nachteilig beim Zeitmultiplex ist, daß die Sendeleistung der einzelnen Übertragungsstrecken innerhalb der zugewiesenen Zeitschlitze relativ groß, ansonsten Null ist, was zu einem unrationellen Betriebszustand der Senderendstufen führen kann, und daß impulsförmige Störsignale und kurzzeitig auftretende Dämpfungsüberhöhungen auf die einzelnen Übertragungsstrecken in unterschiedlicher Weise wirken. Auch bei Zeitmultiplex ist das System somit nicht ausgewogen. Ein weiterer Nachteil des in der DE-OS 2 727 263 beschriebenen Verfahrens besteht darin, daß die Übertragungsfrequenzen auf den Tonfrequenzbereich beschränkt sind, obwohl die Übertragungseigenschaften des Netzes insbesondere bei Übertragungen über kürzere Distanzen, z. B. innerhalb von Gebäudekomplexen, durchaus auch wesentlich höhere Frequenzen zulassen.

Aus der GB-A-2 094 598 ist eine Übertragungseinrichtung bekannt, die Signale über ein Energieversorgungsnetz überträgt. Zum Beispiel zur Fernablesung eines Meßgerätes erfolgt die Übertragung digitaler Signale mit Hilfe einer Bandspreizung auf der Grundlage von Chirp-Signalen, deren Frequenz über 15 kHz liegt. Die als Impulse übertragenen Chirp-Signale werden mit der zu übertragenden Nachricht moduliert. Zur Synchronisation benötigt man jedoch im Sender und Empfänger jeweils ein Rundfunkempfangsgerät, das zu einem relativ komplizierten Gesamtaufbau führt.

Der Erfindung liegt daher die Aufgabe zugrunde, ein relativ einfaches Vielfachzugriffssystem mit der Möglichkeit der selektiven Adressierung und des selektiven Empfangs zu realisieren, bei dem die einzelnen Übertragungsstrecken in spektraler und zeitlicher Hinsicht das verfügbare Frequenzband in gleichmäßiger und gleichberechtigter Weise nutzen, wobei dieses Frequenzband in bekannter Weise oberhalb des Bereiches der hörbaren Frequenzen liegen soll. Jede der Übertragungsstrecken soll spektral nicht auf einen einzigen Teilbereich des verfügbaren Übertragungsbandes eingeengt werden, und jede der Übertragungsstrecken soll nicht auf Teilbereiche der insgesamt verfügbaren Übertragungsdauer eingeengt werden. Gleichzeitig soll ausgeschlossen sein, daß die verschiedenen Übertragungsstrecken sich in unerwünschter Weise gegenseitig stören.

Diese Aufgabe wird durch die im Anspruch 1 gekennzeichneten Merkmale gelöst.

Hierdurch wird eine Einrichtung bzw. ein Verfahren geschaffen, das gegen schmalbandige und/oder impulsartige Störsignale und Dämpfungsüberhöhungen in optimaler Weise resistent ist.

Vorteilhafte Weiterbildungen ergeben sich aus den Unteransprüchen.

In der Zeichnung ist ein Ausführungsbeispiel der erfindungsgemäßen Einrichtung dargestellt, das nachfolgend im einzelnen erläutert ist. Hierbei zeigt:

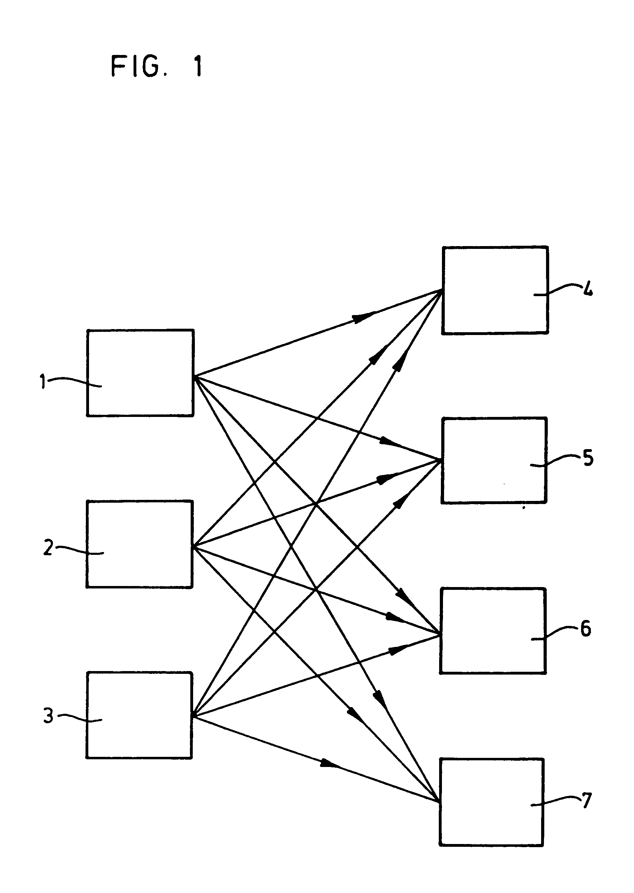

Fig. 1    die signalflußmäßige Grundstruktur der Einrichtung,

Fig. 2    den Anschluß der Sender und Empfänger an das Energieversorgungsnetz,

Fig. 3    ein Diagramm der von jedem Sender gesendeten Frequenzen,

Fig. 4    den Verlauf der Frequenz eines Senders,

Fig. 5    eine Ausgestaltung eines Senders und

Fig. 6    eine Ausgestaltung eines Empfängers.

Die dargestellte Einrichtung ist zur Übertragung digitaler Daten geeignet und enthält drei Sender 1, 2, 3 und vier Empfänger 4, 5, 6, 7. Jeder der vier Empfänger 4, 5, 6, 7 kann wahlweise das Signal eines der drei Sender 1, 2, 3 empfangen und auswerten.

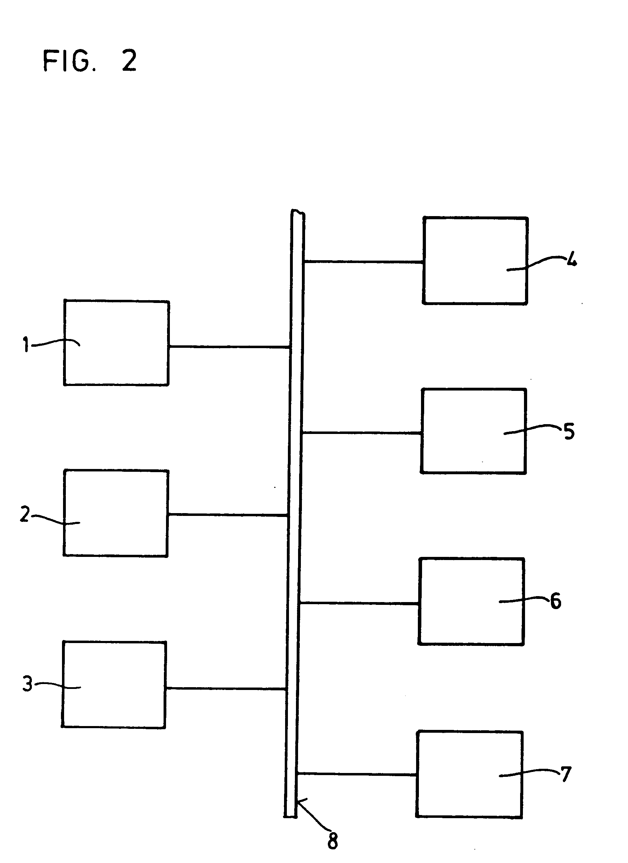

In Fig. 2 ist der Anschluß der Sender und Empfänger an das Energieversorgungsnetz 8 gezeigt. Es handelt sich um ein dreiphasiges Drehstromnetz mit der Periodendauer T der Netzwechselspannung.

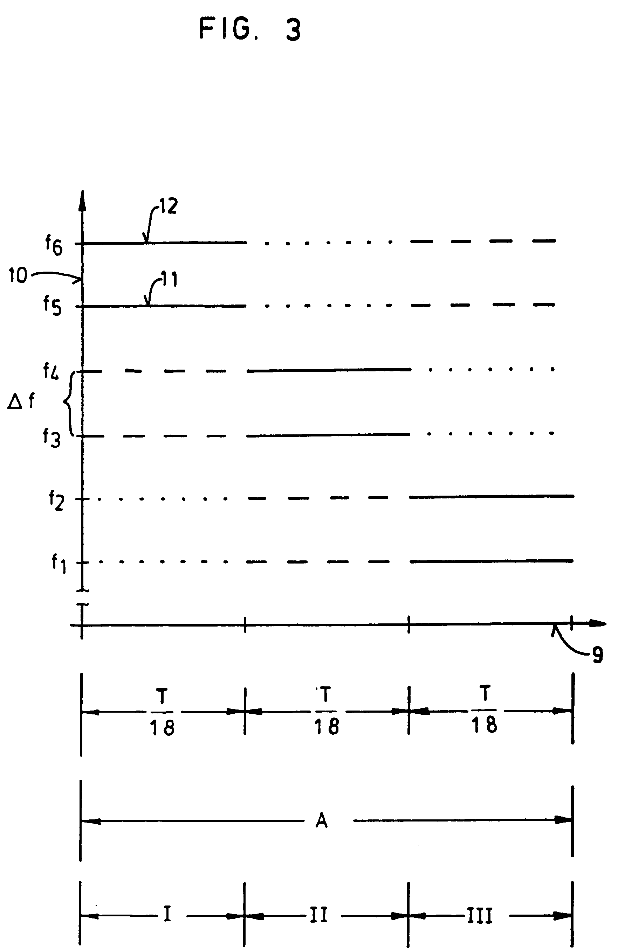

Das Diagramm nach Fig. 3 läßt erkennen, welche Frequenzen von jedem der Sender 1, 2, 3 abhängig vom zu übertragenden Datenbit während einer Bitdauer A gesendet werden. Die Zeitachse 9 ist in drei gleichgroße Abschnitte I, II, III der Dauer T/18 eingeteilt, wobei diese Einteilung für alle Sender und Empfänger in gleicher Weite gültig ist. Die vertikale Achse 10 ist eine Frequenzachse, auf der die verfügbaren Übertragungsfrequenzen $f_1$, $f_2$, $f_3$, $f_4$, $f_5$, $f_6$ angemerkt sind. Der Frequenzabstand von Frequenz zu Frequenz habe den konstanten Wert.

$$f = f_6 - f_5 = f_5 - f_4 = f_4 - f_3 = f_3 - f_2 = f_2 - f_1. \quad (1)$$

Die Übertragungsdauer für jedes Datenbit umfaßt drei aufeinanderfolgende Rasterintervalle der Dauer T/18, beträgt insgesamt also T/6, wie dies auch aus Fig. 3 zu entnehmen ist. Die beiden ausgezogenen Kurven 11 und 12 in Fig. 3 gelten für den Sender 1, und zwar variiert dessen Frequenz nach Kurve 11, wenn das betreffende Datenbit logisch 0 = L ist, und nach Kurve 12, wenn das betreffende Datenbit logisch 1 = H ist. Die gestrichelten Kurven gelten in entsprechender Weise für den Sender 2, die gepunkteten Kurven für den Sender 3.

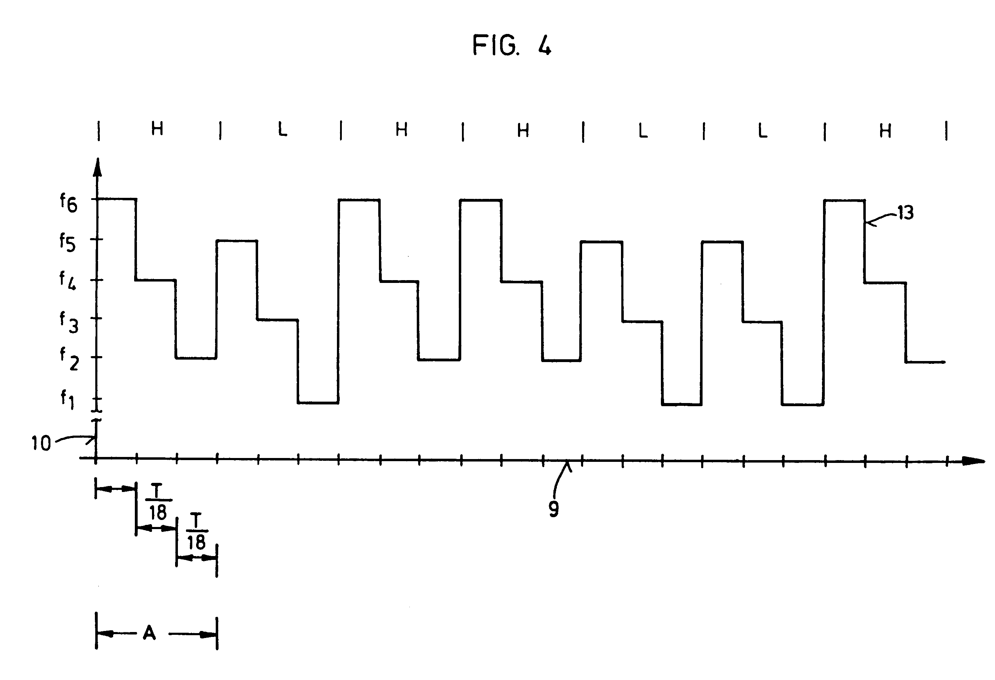

In Fig. 4 ist der Verlauf der Frequenz des Senders 1 für den Fall, daß die Datenfolge ...HLHHLLH... gesendet wird, dargestellt. Die Kurve 13 nach Fig. 4 entsteht durch mehrmaliges Aneinandersetzen der beiden ausgezogenen Kurven 11 und 12 aus Fig. 3.

Die Fig. 3 und 4 zeigen anschaulich die Vorteile der erfindungsgemäßen Einrichtung. Alle Sender 1, 2, 3 können gleichzeitig aktiv sein, und alle Frequenzen des verfügbaren Frequenzvorrats $f_1$, $f_2$, $f_3$, $f_4$, $f_5$, $f_6$ stehen zeitlich sukzessive allen beteiligten Sendern 1, 2, 3 zur Verfügung. Dadurch wird erreicht, daß sich schmalbandige und/oder impulsive Störsignale und Dämpfungsüberhöhungen in ihrer Wirkung nicht auf spezielle Sendesignale konzentrieren, sondern alle Sendesignale gleichermaßen betreffen.

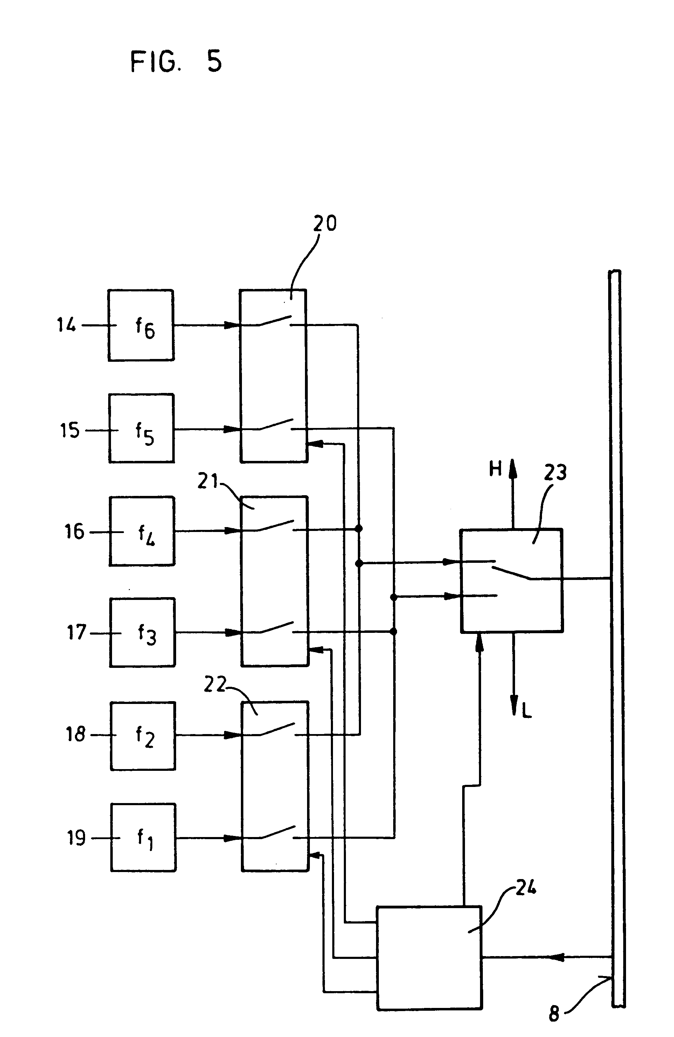

Fig. 5 zeigt eine mögliche Ausführungsform des Senders 1. Der Sender enthält die dauernd schwingenden Oszillatoren 14 bis 19 mit den Frequenzen $f_1$, $f_2$, $f_3$, $f_4$, $f_5$, $f_6$, die Schalter 20, 21 und 22, den Umschalter 23, den Zeitgeber 24 und entsprechende Verbindungselemente. Der Zeitgeber 24 steuert in einem Taktraster mit der Taktdauer T/18 die Schalter 20, 21 und 22 sowie in einem Taktraster mit der Taktdauer T/6, die gleich der Bitdauer ist, den Umschalter 23. Dadurch wird bewirkt, daß dem Umschalter 23 im Abschnitt I die Frequenzen $f_5$ und $f_6$, im Abschnitt II die Frequenzen $f_3$ und $f_4$ und in Abschnitt III die Frequenzen $f_1$ und $f_2$ zugeführt werden. Mit dem Umschalter 23 wird bewirkt, daß bei Anstehen des Datenbits L sukzessive die Frequenzen $f_6$, $f_4$ und $f_2$ auf das Energieversorgungsnetz 8 gegeben werden.

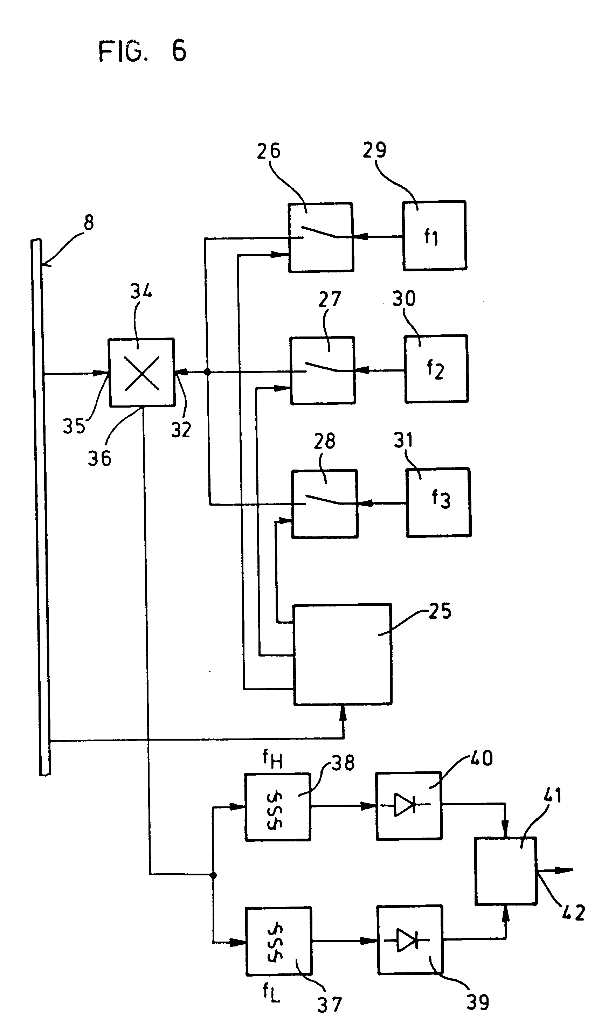

Fig. 6 zeigt eine mögliche Ausführungsform des zu dem Sender 1 nach Fig. 5 passenden Empfängers 4. Ein Zeitgeber 25 ähnlich demjenigen im Sender 1 steuert die Schalter 26, 27 und 28, mit denen zeitlich sukzessive die Signale der auf den Frequenzen $f_1$, $f_2$ und $f_3$ schwingenden Oszillatoren 29, 30 und 31 auf den Eingang 32 des Mischers 34 geschaltet werden. Auf den Eingang 35 des Mischers 34 wird das aus dem Energieversorgungsnetz 8 ausgekoppelte, vom Sender 1 nach Fig. 5 herrührende Empfangssignal gegeben.

Das am Ausgang 36 des Mischers 34 anstehende Signal enthält einen Anteil, dessen Frequenz gleich der Summe der Frequenzen der an den Eingängen 32 und 35 eingespeisten Signale ist. Für den Fall, daß das Datenbit "L" empfangen wird, beträgt diese Summenfrequenz

$$f_L = f_1 + f_5. \quad (2)$$

Für den Fall, daß das Datenbit "H" empfangen wird, beträgt diese Summenfrequenz

$$f_H = f_1 + f_5 + f \quad (3)$$

Die Frequenzen $f_L$ und $f_H$ stellen sich in allen drei Abschnitten I, II und III nach Fig. 3 ein. Man kann deshalb den empfangenen logischen Wert des Datenbits L bzw. H dadurch ermitteln, daß man das Ausgangssignal des Mischers 34 jeweils einem Bandpaß 37 mit der Mittenfrequenz $f_L$ nach (2) und einem Bandpaß 38 mit der Mittenfrequenz $f_H$ nach (3) zuführt, wobei die Ausgangssignale der Bandpässe 37, 38 mit den beiden Gleichrichtern 39 und 40 gleichgerichtet und im Komparator 41 miteinander wertemäßig verglichen werden. Am Komparatorausgang 42 kann das empfangene Datensignal entnommen werden.

**Patentansprüche**

1. Verfahren für netzgebundene Vielfachzugriff mit der Möglichkeit der selektiven Adressierung und des selektiven Empfangs, unter Verwendung von einem oder mehreren, insbesondere vielen Sendern (1, 2, 3), und einem oder mehreren, insbesondere vielen Empfängern (4, 5, 6, 7), wobei diese Sender und Empfänger mit Koppelelementen an ein ein- oder mehrphasiges elektrisches Wechselspannungsenergieversorgungsnetz angekoppelt sind und auf diese Weise miteinander in Verbindung stehen, zur Sendung digitaler Daten- oder Nachrichtensignale, insbesondere Sensorsignale oder Signale zur Steuerung von Aktoren, von jedem Sender an wahlweise jeden Empfänger und zum Empfang solcher Signale durch jeden Empfänger von wahlweise jedem Sender, mit folgenden Merkmalen
   - als Sendefrequenz wird eine Vielzahl von diskreten Frequenzen (Frequenzvorrat), vorzugsweise im Bereich oberhalb der Tonfrequenz, verwendet,
   - die Sendefrequenz eines jeden Senders variiert in einem für alle Sender gemeinsamen, d. h. globalen Zeitraster der Frequenz $f_z$ innerhalb des genannten Frequenzvorrats sprunghaft, wobei jeder Sender ein nach einem determinierten Schema für ihn typisches Variationsmuster (Code) benutzt, anhand dessen er Empfänger selektiv adressieren kann,
   - die Sendefrequenzen der einzelnen Sender sind so gewählt, daß ein und dieselbe Sendefrequenz von verschiedenen Sendern nicht gleichzeitig benutzt wird,
   - es können mehrere oder alle Sender gleichzeitig senden,
   - es können mehrere oder alle Empfänger gleichzeitig empfangen,
   - das globale Zeitraster wird aus der Netzfrequenz gewonnen,
   - bei Sendung eines m-wertigen (m = 2,3...) digitalen Signals wird ein für den jeweiligen Signalwert und den jeweiligen Sender bzw. anzusprechenden Empfänger typische Folge von Sendefrequenzen aus dem Frequenzvorrat gesendet,
   - die Übertragungsdauer für jeden Signalwert entspricht einem ganzzahligen Bruchteil, z. B. 1/2, 1/3,1/4, 1/6 ... oder ganzzahligen Vielfachen, z. B. 1, 2, 3 ... der Netzperiodendauer,
   - durch die Wahl der Frequenz $f_z$ des globalen Zeitrasters und der Frequenzen des Frequenzvorrats wird ein System orthogonaler Signalformen geschaffen.

2. Verfahren nach Anspruch 1 zur Übertragung über ein Wechselspannungsnetz, dadurch gekennzeichnet, daß die Frequenz $f_z$ des globalen Zeitrasters ein ganzzahliges Vielfaches der Netzfrequenz ist.

3. Verfahren nach Anspruch 1 oder 2, dadurch gekennzeichnet, daß in den Sendern ein Satz von Oszillatoren nach Maßgabe des globalen Zeitrasters eingeschaltet wird.

4. Verfahren nach einem der vorherigen Ansprüche, dadurch gekennzeichnet, daß in den Sendern die Frequenzen des Frequenzvorrats durch Auslesen aus digitalen Speichern oder mit digitalen Signalprozessoren generiert werden.

5. Verfahren nach einem der vorherigen Ansprüche, dadurch gekennzeichnet, daß in den Sendern die Frequenzen des Frequenzvorrats mit spannungsgesteuerten Oszillatoren erzeugt werden.

6. Verfahren nach einem der vorherigen Ansprüche, dadurch gekennzeichnet, daß in den Empfängern die gleichen Generatoren wie in den Sendern vorgesehen sind.

7. Verfahren nach einem der vorherigen Ansprüche, dadurch gekennzeichnet, daß die Signalauswertung in den Empfängern durch aktive oder passive Korrelation erfolgt.

8. Verfahren nach einem der vorherigen Ansprüche, dadurch gekennzeichnet, daß Sender und Empfänger verwendet werden, deren Code umschaltbar ist.

9. Verfahren nach einem der vorherigen Ansprüche, dadurch gekennzeichnet, daß zur Realisierung von Übertragungen mit Hin- und Rückkanal Sender mit Empfängern zu Funktionsgruppen kombiniert sind.

10. Verfahren nach einem der vorherigen Ansprüche, dadurch gekennzeichnet, daß Sender und Empfänger verwendet werden, die ihre Energie aus dem zur Übertragung verwendeten Energieversorgungsnetz entnehmen.

**11.** Verfahren nach einem der vorherigen Ansprüche, dadurch gekennzeichnet, daß manuell oder automatisch zur Meidung von starken Störungen oder Dämpfungsüberhöhungen eine diesen Übertragungseigenschaften des Netzes angepaßte Kanal- bzw. Codewahl getroffen wird.

**12.** Netzgebundene Vielfachzugriffseinrichtung mit der Möglichkeit der selektiven Adressierung und des selektiven Empfangs zur Durchführung des Verfahrens nach einem der vorherigen Ansprüche, bestehend aus einem oder mehreren, insbesondere vielen Sendern, und aus einem oder mehreren, insbesondere vielen Empfängern, wobei diese Sender und Empfänger mit Koppelelementen an ein ein- oder mehrphasiges elektrisches Wechselspannungsenergieversorgungsnetz angekoppelt sind und auf diese Weise miteinander in Verbindung stehen, zur Sendung digitaler Daten- oder Nachrichtensignale, insbesondere Sensorsignale oder Signale zur Steuerung von Aktoren, von jedem Sender an wahlweise jeden Empfänger und zum Empfang solcher Signale durch jeden Empfänger von wahlweise jedem Sender, dadurch gekennzeichnet, daß die Sender (1, 2, 3) jeweils aus einer Vielzahl dauernd schwingender Oszillatoren (14, 15, 16, 17, 18, 19), diesen vorzugsweise paarweise nachgeschalteten Schaltern (20, 21, 22) sowie einem diesen zugeordneten Umschalter (23) und einen Zeitgeber (24) gebildet sind, wobei der Umschalter (23) und der Zeitgeber (24) an das Energieversorgungsnetz (8) angeschlossen und mit der Netzfrequenz synchronisiert sind, und daß jeder Empfänger (4, 5, 6, 7) aus einem Zeitgeber (25), einer Vielzahl diesem nachgeschalteten mit schwingenden Oszilatoren (29, 30, 31) versehenen Schalter (26, 27, 28) und einem mit diesen verbundenen Mischer (34) gebildet ist, wobei dieser und der Zeitschalter (25) an das Energieversorgungsnetz (8) angeschlossen sind und das Ausgangssignal des Mischers (34) einem Bandpass (37) mit der Mittenfrequenz $f_L$ und dem Bandpass (38) mit der Mittenfrequenz $f_H$ zuführbar ist, deren Ausgangssignale über Gleichrichter (39, 40) in einem das Datensignal abgebenden Komparator (41) wertmäßig verglichen werden.

**Claims**

**1.** Method for mains multiple access with the possibility of selective addressing and selective reception, using one or more, in particular many transmitters (1, 2, 3) and one or more, in particular many receivers (4, 5, 6, 7), these transmitters and receivers being coupled by coupling elements to a monophase or multiphase electric AC voltage power supply network and in this way being connected to one another, for transmitting digital data signals or message signals, in particular sensor signals or signals for controlling actuators, from each transmitter to optionally each receiver, and for receiving such signals by means of each receiver from optionally each transmitter, having the following features

- use is made as transmitter frequency of a multiplicity of discrete frequencies (frequency supply), preferably in the range above the audio frequency,

- within the said frequency supply, the transmitter frequency of each transmitter varies suddenly in a clock raster, of frequency $f_z$, which is common to all the transmitters, that is to say global, each transmitter using a variation pattern (code) which is typical of it in accordance with a defined scheme and with the aid of which it can selectively address receivers,

- the transmitter frequencies of the individual transmitters are selected such that one and the same transmitter frequency is not simultaneously used by different transmitters,

- a plurality or all of the sensors can transmit simultaneously,

- a plurality or all of the receivers can receive simultaneously,

- the global clock raster is obtained from the power frequency,

- when an m-valued (m = 2,3...) digital signal is transmitted, a sequence of transmitter frequencies from the frequency supply is transmitted, which sequence is typical of the respective signal value and of the respective transmitter or of the respective receiver to be addressed,

- the transmission period for each signal value corresponds to an integral fraction, for example 1/2, 1/3, 1/4, 1/6 ... or integral multiple, for example 1, 2, 3 ... of the power period,

- a system of orthogonal signal shapes is created by selecting the frequency $f_z$ of the global clock raster and the frequencies of the frequency supply.

**2.** Method according to Claim 1, for transmitting via an AC voltage network, characterised in that the frequency $f_z$ of the global clock raster is an integral multiple of the power frequency.

3. Method according to Claim 1 or 2, characterised in that a set of oscillators is inserted in the transmitters in accordance with the global clock raster.

4. Method according to one of the preceding claims, characterised in that the frequencies of the frequency supply are generated in the transmitters by reading out from digital memories, or by means of digital signal processors.

5. Method according to one of the preceding claims, characterised in that the frequencies of the frequency supply are generated in the transmitters by means of voltage-controlled oscillators.

6. Method according to one of the preceding claims, characterised in that the same generators are provided in the receivers as in the transmitters.

7. Method according to one of the preceding claims, characterized in that the signal evaluation is performed in the receivers by active or passive correlation.

8. Method according to one of the preceding claims, characterised in that use is made of transmitters and receivers whose code can be changed over.

9. Method according to one of the preceding claims, characterised in that transmitters are combined with receivers to form functional groups in order to realise transmissions with a forward and backward channel.

10. Method according to one of the preceding claims, characterised in that use is made of transmitters and receivers which draw their energy from the power supply network used for transmission.

11. Method according to one of the preceding claims, characterised in that in order to avoid strong interference or damping overshoots the channel or code is selected manually or automatically, in a manner matched to these transmission characteristics.

12. Mains multiple access device with the possibility of selective addressing and selective reception for the purpose of carrying out the method according to one of the preceding claims, consisting of one or more, in particular many transmitters and one or more, in particular many receivers, these transmitters and receivers being coupled by coupling elements to a monophase or multiphase electric AC voltage power supply network and in this way being connected to one another, for transmitting digital data signals or message signals, in particular sensor signals or signals for controlling actuators, from each transmitter to optionally each receiver, and for receiving such signals by means of each receiver from optionally each transmitter, characterised in that the transmitters (1, 2, 3) are respectively formed from a multiplicity of permanently oscillating oscillators (14, 15, 16, 17, 18, 19), switches (20, 21, 22) preferably connected downstream of the latter in pairs, and a changeover switch (23) assigned to said switches and a timer (24), the changeover switch (23) and the timer (24) being connected to the power supply network (8) and synchronised with the power frequency, and in that each receiver (4, 5, 6, 7) is formed from a timer (25), a multiplicity of switches (26, 27, 28), which are connected downstream of said timer and have oscillating oscillators (29, 30, 31), and a mixer (34) connected to said switches, said mixer and the timer (25) being connected to the power supply network (8), it being possible to feed the output signal of the mixer (34) to a band pass filter (37) with the centre frequency $f_L$ andto the band pass filter (38) with the centre frequency $f_H$,the output signals of which band pass filters are compared in terms of value via rectifiers (39, 40) in a comparator (41) which transmits the data signal.

**Revendications**

1. Procédé de multiplexage avec liaison par réseau et avec possibilité d'adressage sélectif et de réception sélective, en utilisant un ou plusieurs émetteurs, notamment un grand nombre d'émetteurs (1, 2, 3), et un ou plusieurs récepteurs, notamment un grand nombre de récepteurs (4, 5, 6,7), ces émetteurs et récepteurs étant couplés, par des éléments de couplage, à un réseau de distribution d'énergie électrique à tension alternative mono- ou polyphasée et se trouvant ainsi en liaison les uns avec les autres pour l'envoi de signaux de données ou de signaux d'information numériques, notamment de signaux de capteurs ou de signaux pour la commande d'acteurs, de chaque émetteur à chaque récepteur, cela sélectivement, et pour la réception sélective, par chaque récepteur, de tels signaux de chaque émetteur , avec les caractéristiques suivantes:
   - comme fréquence(s) d'émission, on utilise une pluralité de fréquences discrètes (réserve de fréquences), de préférence dans le domaine au-dessus des audiofréquences;

- la fréquence d'émission de chaque émetteur varie par sauts dans un modèle temporel global, c'est-à-dire commun à tous les émetteurs, dont la fréquence $f_z$ est comprise à l'intérieur de ladite réserve de fréquences, chaque émetteur utilisant un motif de variation (code) qui le caractérise selon un schéma déterminé, motif à l'aide duquel il peut réaliser l'adressage sélectif de récepteurs;
- les fréquences d'émission des émetteurs individuels sont choisies de manière qu'une même fréquence d'émission ne soit pas utilisée simultanément par différents émetteurs;
- plusieurs émetteurs, ou tous les émetteurs, peuvent émettre simultanément;
- plusieurs récepteurs, ou tous les récepteurs, peuvent recevoir simultanément;
- le modèle temporel global est obtenu à partir de la fréquence du réseau;
- en cas d'émission d'un signal numérique m-aire (m = 2, 3,...), il y a émission d'une séquence de fréquences d'émission tirées de la réserve de fréquences, cette séquence étant caractéristique de la valeur de signal concernée et de l'émetteur concerné ou, selon le cas, du récepteur destinataire;
- la durée de transmission pour chaque valeur de signal correspond à une fraction simple à dénominateur entier, par exemple 1/2, 1/3, 1/4, 1/6, ou à un multiple entier, par exemple 1, 2, 3... de la durée d'une période du réseau;
- le choix de la fréquence $f_z$ du modèle temporel global et des fréquences de la réserve de fréquences est effectué de manière à créer un système de formes de signaux orthogonales.

2. Procédé selon revendication 1, pour transmettre par l'intermédiaire d'un réseau à tension alternative, caractérisé par le fait que la fréquence $f_z$ du modèle temporel global est un multiple entier de la fréquence du réseau.

3. Procédé selon revendication 1 ou 2, caractérisé par le fait qu'un jeu d'oscillateurs est activé, dans les émetteurs, conformément au modèle temporel global.

4. Procédé selon l'une des revendications précédentes, caractérisé par le fait que, dans les émetteurs, les fréquences de la réserve de fréquences sont générées par lecture de mémoires numériques ou par des processeurs de signaux numériques.

5. Procédé selon l'une des revendications précédentes, caractérisé par le fait que les fréquences de la réserve de fréquences sont produites dans les émetteurs par des oscillateurs commandés par tension.

6. Procédé selon l'une des revendications précédentes, caractérisé par le fait que l'on prévoit, dans les récepteurs, les mêmes générateurs que dans les émetteurs.

7. Procédé selon l'une des revendications précédentes, caractérisé par le fait que l'interprétation des signaux dans les récepteurs s'effectue par corrélation active ou passive.

8. Procédé selon l'une des revendications précédentes, caractérisé par le fait que l'on utilise des émetteurs et récepteurs dont le code est commutable.

9. Procédé selon l'une des revendications précédentes, caractérisé par le fait que, pour réaliser des transmissions avec canal d'aller et retour, des émetteurs sont combinés avec des récepteurs pour constituer des groupes fonctionnels.

10. Procédé selon l'une des revendications précédentes, caractérisé par le fait que l'on utilise des émetteurs et récepteurs qui tirent leur énergie du réseau de distribution d'énergie utilisé pour la transmission.

11. Procédé selon l'une des revendicationts précédentes, caractérisé par le fait que, pour éviter des perturbations importantes ou des accroissements d'atténuation, on réalise manuellement ou automatiquement, une sélection de canal et/ou de code adaptée aux caractéristiques de transmission du réseau.

12. Dispositif de multiplexage avec liaison par réseau et avec possibilité d'adressage sélectif et de réception sélective, pour mettre en oeuvre le procédé selon l'une des revendications précédentes, constitué par un ou plusieurs émetteurs, notamment par un grand nombre d'émetteurs, et par un ou plusieurs récepteurs, notamment par un grand nombre de récepteurs, ces émetteurs et ces récepteurs étant couplés, par des éléments de couplage, à un réseau de distribution d'énergie électrique à tension alternative mono- ou polyphasée et se trouvant ainsi en liaison les uns avec les autres, pour l'envoi de signaux de données ou de signaux d'information numériques, notamment de signaux de capteurs ou de signaux pour la commande d'acteurs, de chaque émetteur à chaque récepteur, cela sélectivement, et pour la réception sélective, par chaque récepteur, de tels signaux de chaque émetteur, caractérisé par le fait que chacun des émetteurs (1, 2, 3) est constitué par une pluralité d'oscillateurs (14, 15, 16, 17, 18, 19) oscillant en permanence, par des interrupteurs (20, 21, 22) montés par paires en aval de ceux-ci, ainsi que par un commutateur (23) conjugué à ces interrupteurs et par une horloge (24), le commutateur (23) et l'horloge (24) étant raccordés au réseau de distribution d'énergie (8) et étant synchronisés par la fréquence du réseau, et par le fait que chaque récepteur (4, 5, 6, 7) est constitué par une horloge (25), par une pluralité d'interrupteurs (26, 27, 28) qui sont montés en aval de celle-ci et sont munis d'oscillateurs oscillant (29, 30, 31) et par un mélangeur (34) relié à ces interrupteurs, ce mélangeur et l'interrupteur temporisé (25) étant raccordés au réseau de distribution d'énergie (8) et le signal de sortie du mélangeur (34) pouvant être transmis à un passe-bande (37) de fréquence médiane $f_L$ et au passe-bande (38) de fréquence médiane $f_H$, les signaux de sortie de ces passe-bande étant amenés par des redresseurs (39, 40) pour être comparés en valeur dans un comparateur (41) délivrant le signal de donnée.

FIG. 1

FIG. 2

# FIG. 3

FIG. 4

FIG. 5

# FIG. 6